Europäisches Patentamt

European Patent Office

Office européen des brevets

(19)

(11) Numéro de publication: **0 286 493 B1**

(12) **FASCICULE DE BREVET EUROPEEN**

(45) Date de publication du fascicule du brevet:
**12.12.90**

(21) Numéro de dépôt: **88400688.3**

(22) Date de dépôt: **22.03.88**

(51) Int. Cl.⁵: **F16C 13/02**, F16C 37/00,
B22D 11/128, B21B 31/07

(54) **Dispositif de montage pour rouleau comprenant un palier refroidi.**

(30) Priorité: **25.03.87 FR 8704135**

(43) Date de publication de la demande:
**12.10.88 Bulletin 88/41**

(45) Mention de la délivrance du brevet:
**12.12.90 Bulletin 90/50**

(84) Etats contractants désignés:
**AT BE CH DE ES GB IT LI LU NL SE**

(56) Documents cités:
**DE-A- 2 737 825**
**GB-A- 2 046 386**

(73) Titulaire: **DUJARDIN MONTBARD SOMENOR, Z.I.
Lille-Seclin B.P. 219, F-59472 Seclin Cédex(FR)**

(72) Inventeur: **Jude, Daniel, 89, Allée des Clématites,
F-59650 Villeneuve D'Ascq(FR)**
Inventeur: **Stull, James T., Kaufman Road, RD 3, Evans
City, Pa 16033(US)**

(74) Mandataire: **Fontanié, Etienne, FIVES-CAIL
BABCOCK 38, rue de la République, F-93107 Montreuil
Cédex(FR)**

**Description**

La présente invention a pour objet un dispositif de montage pour rouleau, notamment pour rouleau de coulée continue, comprenant un bâti et un palier fixé sur le bâti, éventuellement avec interposition de cales entre les surfaces d'appui du palier et du bâti, et comportant des canaux pour la circulation d'un fluide de refroidissement reliés à des conduites d'amenée et d'évacuation dudit fluide fixées sur le bâti.

Généralement, les liaisons entre les conduites et les canaux sont réalisées au moyen de tuyaux flexibles ou rigides situés à l'extérieur du bâti et par conséquent très vulnérables. En particulier, dans les machines de coulée continue, ces tuyaux risquent d'être détruits par le métal liquide s'échappant du produit coulé en cas de percée. De plus, chaque fois que l'on veut remplacer un rouleau et ses paliers, il faut détacher les tuyaux des paliers et les raccorder aux paliers du nouveau rouleau, ce qui prend du temps et complique l'opération.

On a proposé, pour remédier à ces inconvénients, de munir le palier d'embouts raccordés aux canaux de refroidissement, en saillie sur la face d'appui du palier et venant s'emmancher, lorsqu'on pose le palier sur le bâti, dans l'extrémité ouverte de canaux percés dans le bâti et reliés aux conduites d'amenée et d'évacuation du fluide de refroidissement ; les embouts ont une extrémité tronconique pour faciliter leur entrée dans les canaux du bâti et sont munis de joints d'étanchéité. Cette solution n'est pas satisfaisante lorsqu'il est nécessaire de pouvoir régler la position du palier par rapport au bâti, par interposition de cales d'épaisseur, comme c'est en particulier le cas sur une machine de coulée continue où la position de chaque rouleau doit être réglée de façon à ce que l'ensemble des rouleaux définisse une surface d'appui régulière et ayant profil prédéterminé. Elle implique, par ailleurs, un alignement parfait des embouts et des canaux du bâti qui est difficilement réalisable avec des ensembles paliers-rouleaux de grande longueur.

Une solution voisine est illustrée le document DE-A 2 737 825 qui montre un dispositif de montage d'un palier sur un bâti dans lequel les embouts ainsi que les canaux dans lesquels il s'adaptent sont disposés parallèlement au plan d'appui du palier sur le bâti. Dans ce dispositif, une pièce tubulaire est montée coulissante dans un logement aménagé à l'extrémité de chaque canal et poussée par un ressort contre l'extrémité de l'embout. Cette solution permet d'assurer une bonne étanchéité sans positionnement précis du palier dans le sens axial. Mais elle n'autorise pas le réglage en hauteur du palier.

Le but de la présente invention est de remédier aux inconvénients de cette solution et d'assurer une connexion parfaitement étanche entre les canaux du palier et ceux du bâti sans positionnement précis du palier dans le sens axial et avec possibilité de réglage de la position en hauteur du palier par rapport au bâti.

Le dispositif objet de la présente invention comporte, comme le dispositif connu, une pièce tubulaire montée de façon à pouvoir coulisser longitudinalement dans un logement aménagé à l'extrémité de chacun des canaux et poussée vers l'extérieur par un ressort et est caractérisé en ce que les canaux respectifs du palier et du bâti communiquent entre eux à travers le plan d'appui du palier sur le bâti, en ce que l'extrémité de ladite pièce tubulaire est maintenue en contact, par ledit ressort, avec une surface plane du bâti ou du palier, et en ce que cette extrémité et la partie cylindrique de la pièce tubulaire sont munies de joints d'étancheité.

Le diamètre intérieur minimum des pièces tubulaires est au moins égal au diamètre des canaux, et les dites pièces sont placées dans des logements de plus grand diamètre ménagés à l'entrée des canaux. Ces pièces comportent un épaulement extérieur coopérant avec des butées du palier ou du bâti pour les empêcher de sortir entièrement de leur logement. Les ressorts sont des ressorts à boudin logés à l'intérieur desdites pièces et comprimés entre un épaulement des canaux et un épaulement intérieur desdites pièces.

D'autres caractéristiques de l'invention apparaîtront à la lecture de la description qui suit et se réfère aux dessins l'accompagnant qui montrent, à titre d'exemple non-limitatif, un mode de réalisation de l'invention et sur lesquels :

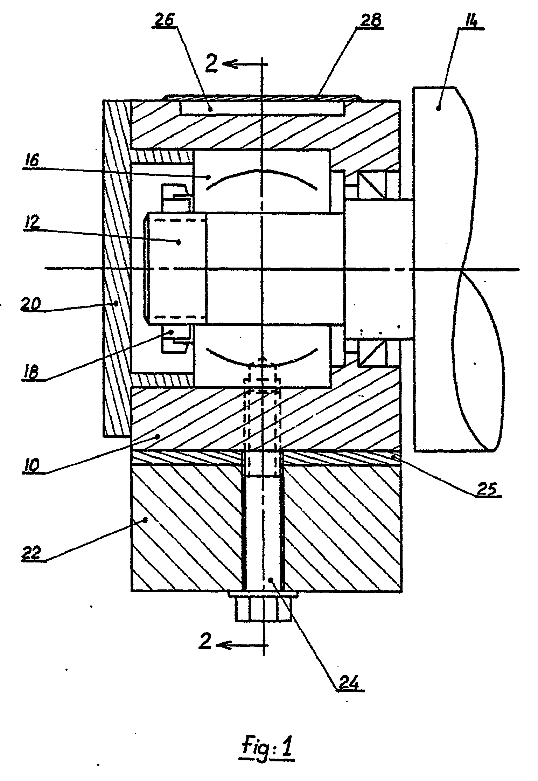

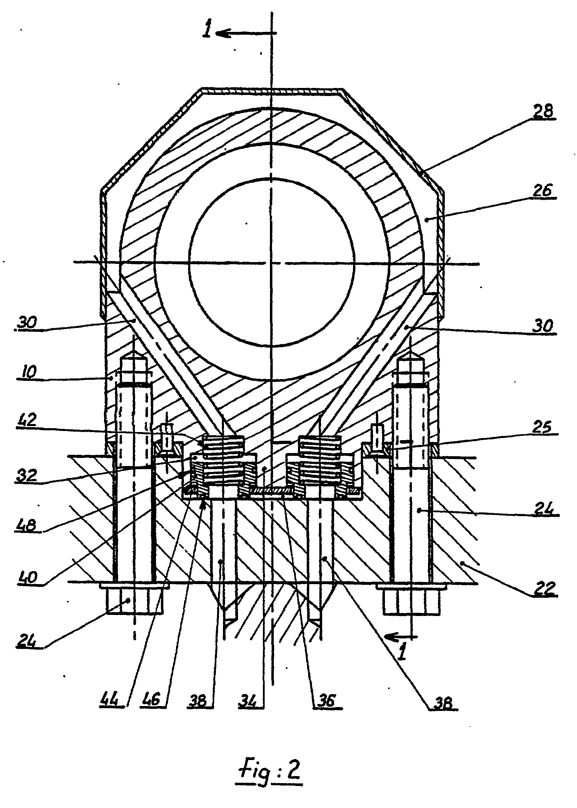

La figure 1 est une vue en coupe, suivant la ligne brisée 1-1 da la figure 2, d'un palier d'un rouleau d'une machine de coulée continue et du bâti sur lequel il est fixé, et

La figure 2 est une coupe suivant 2-2 de l'ensemble de la figure 1.

Le palier 10 représenté sur les dessins est un palier à roulements dans lequel est monté le tourillon 12 du rouleau 14. La cage intérieure du roulement 16 est maintenue sur le tourillon par un écrou 18 et la cage extérieure est maintenue dans le corps du palier par un couvercle 20.

Le palier est fixé sur le bâti 22 par deux vis 24. Des cales 25 sont placées entre le palier et le bâti et permettent d'ajuster la position en hauteur du rouleau par rapport au bâti.

Une chambre semi-circulaire 26 est usinée sur la partie supérieure du palier et fermée par un capot 28 soudé sur le palier. Les deux extrémités de cette chambre sont reliées par des canaux 30 percés dans le corps du palier à deux logements cylindriques 32 usinés dans un appendice 34 du palier reçu dans une échancrure 36 du bâti. Les axes de ces logements sont perpendiculaires au plan du fond de l'échancrure et sont alignés avec les axes de deux canaux 38 percés dans le bâti et auxquels sont raccordées des tuyauteries d'amenée et d'évacuation d'eau non représentées.

Une pièce tubulaire 40 à section circulaire, est montée dans chacun des logements 32. Cette pièce comporte un épaulement extérieur et un épaulement intérieur. Sa partie de plus grand diamètre peut coulisser dans le logement 32 et sa partie de plus petit diamètre est appliquée sur le fond de l'échancrure 36 par un ressort 42 comprimé entre l'épaulement intérieur de la pièce et un épaulement usiné dans le corps du palier, à l'extrémité des canaux 30. Une plaquette 44 percée de trous pour le passage de la partie des pièces 40 appliquée sur le fond de l'échancrure est fixée sur l'appendice 36 ; le diamètre de ces trous est légèrement supérieur à celui de cette partie des pièces 40 et inférieur à celui des logements 32 de sorte que la plaquette 44 empêche les pièces 40 de sortir de leur logement lorsqu'on écarte le palier du bâti. Des joints d'étanchéité 46 et 48 sont logés dans des gorges circulaires usinées sur l'éxtrémité en contact avec le fond de l'échancrure 36 et sur la partie cylindrique de grand diamètre des pièces 40, respectivement.

Ce montage permet de réaliser automatiquement le raccordement des canaux de refroidissement du palier à ceux du bâti lors de la fixation du palier sur le bâti et d'assurer une connexion étanche pour différentes épaisseurs des cales 25, sans qu'il soit nécessaire de maintenir un alignement parfait entre les logements 32 et les canaux 38.

En variante, les pièces 40 pourraient être montées sur le bâti et venir s'appliquer sur la base de l'appendice 34, autour de l'orifice des canaux 30.

Il est bien entendu que toutes les modifications qui peuvent être apportées à ce mode de réalisation par la substitution de moyens techniques équivalents à ceux décrits entrent dans le cadre de l'invention.

## Revendications

1. Dispositif de montage pour rouleau, notamment pour rouleau de coulée continue, comprenant un bâti (22) et un palier (10), fixé sur le bâti, comportant tous deux des canaux (30, 38) pour la circulation d'un fluide, notamment d'un fluide de refroidissement, qui communiquent entre eux, dispositif dans lequel une pièce tubulaire (40) est montée de façon à pouvoir coulisser longitudinalement dans un logement (32) aménagé à l'extrémité de chacun des canaux (30, 38) du palier ou du bâti et est poussée par un ressort (42) vers l'extérieur dudit logement (32) et contre un élément opposé du bâti ou du palier, respectivement, et caractérisé en ce que les canaux respectifs (30, 38) du palier (10) et du bâti (22) communiquent entre eux à travers le plan d'appui du palier sur le bâti, en ce que l'extrémité de ladite pièce tubulaire (40) est maintenue en contact, par ledit ressort (42), avec une surface plane (36) du bâti ou du palier, et en ce que cette extrémité et la partie cylindrique de la pièce tubulaire sont munies de joints d'étanchéité (46, 48).

2. Dispositif selon la revendication 1, caractérisé en ce que ladite pièce (40) comporte un épaulement extérieur coopérant avec une butée du palier (10) ou du bâti (22) pour l'empêcher de sortir de son logement (32).

3. Dispositif selon la revendication 1 ou 2, caractérisé en ce que ledit ressort (42) est un ressort hélicoïdal comprimé entre un épaulement intérieur de ladite pièce (40) et un épaulement formé sur le palier ou le bâti.

## Claims

1. Mounting device for a roll, particularly for a continuous casting roll, comprising a frame (22) and a bearing (10) fastened to the frame, both including channels (30, 38) for the circulation of a fluid, particularly a cooling fluid, which communicate with one another, in which device a tubular part (40) is mounted so that it can slide lengthwise in a housing (32) arranged at the end of the channels (30, 38) of the bearing or of the frame and is pushed by a spring (42) outward of the said housing (32) and against an opposite element of the frame or of the bearing. respectively, and characterized in that the respective channels (30, 38) of the bearing (10) and of the frame (22) communicate with each other across the plane of support of the bearing on the frame, in that the end of the said tubular part (40) is maintained in contact with a plane surface (36) of the frame or of the bearing by the said spring (42), and in that this end and the cylindrical portion of the tubular part are provided with gaskets (46, 48)

2. Device accroding to claim 1, characterized in that the said part (40) comprises an outside shoulder cooperating with a stop of the bearing (10) or of the frame (22) to prevent it from sliding out of its housing (32).

3. Device according to claim 1 or 2, characterized in that the said spring (42) is an helical spring compressed between an inside shoulder of the said part (40) an a shoulder formed on the bearing or the frame.

## Patentansprüche

1. Vorrichtung zur Montage von Rollen, insbesondere von Stranggussrollen, bestehend aus einem Rahmen (22) und einem auf dem Rahmen befestigten Lager (10), welche beide miteinander in Verbindung stehende Kanäle (30, 38) zum Umlauf eines Mediums, insbesondere eines Kühlmediums umfassen, wobei in der Vorrichtung ein rohrförmiges Teil (40) derart angeordnet ist, dass es in Längsrichtung in einer jeweils am Ende jeden der Kanäle (30, 38) des Lagers bzw. des Rahmens vorgesehenen Lagerung (32) verschiebbar ist und von einer Feder (42) nach aussen besagter Lagerung (32) und gegen ein jeweils dem Rahmen bzw. dem Lager gegenüberliegendes Teil gedrückt wird, dadurch gekennzeichnet, dass die Verbindung zwischen den jeweiligen Kanälen (30, 38) des Lagers (10) und des Rahmens (22) durch die Lagerauflagefläche auf dem Rahmen hindurch hergestellt wird, dass das Ende besagten rohrförmigen Teils (40) durch besagte Feder (42) mit einer ebenen Fläche (36) des Rahmens bzw. des Lagers in Berührung gehalten wird, und dass dieses Ende und der zylindrische Teil des rohrförmigen Teils mit Dichtungen (46, 48) versehen sind.

2. Vorrichtung gemäss Anspruch 1, dadurch gekennzeichnet, dass besagtes Teil (40), um zu verhindern, dass es aus seiner Lagerung (32) entweicht, eine äussere Schulter umfasst, welche mit einem Anschlag des Lagers (10) bzw. des Rahmens (22) zusammenwirkt.

3. Vorrichtung gemäss Anspruch 1 oder 2, dadurch gekennzeichnet, dass besagte Feder (42) eine zylindrische Schraubenfeder ist, welche zwischen einer inneren Schulter besagten Teils (40) und einer auf dem Lager bzw. dem Rahmen ausgebildeten Schulter zusammengedrückt wird.

*Fig: 1*

Fig : 2